# EUROPÄISCHE PATENTSCHRIFT

(11) **EP 3 587 191 B1**
(45) Veröffentlichungstag und Bekanntmachung des Hinweises auf die Patenterteilung: **17.03.2021**
(21) Anmeldenummer: 19182594.2
(22) Anmeldetag: 26.06.2019
(51) Int. Cl.: B60R 13/08, F01N 13/14, F02B 77/11, F16L 59/08

(54) **HITZESCHILD UND BAUELEMENT MIT EINEM HITZESCHILD**
HEAT SHIELD AND COMPONENT COMPRISING A HEAT SHIELD
ÉCRAN THERMIQUE ET COMPOSANT DOTÉ D'UN ÉCRAN THERMIQUE

(30) Priorität: 29.06.2018 DE 202018103710 U
(43) Veröffentlichungstag der Anmeldung: 01.01.2020
(73) Patentinhaber: REINZ-Dichtungs-GmbH, 89233 Neu-Ulm (DE)
(72) Erfinder: Trippel, Alexander, 89250 Senden (DE); Sauter, Marc, 89264 Biberachzell (DE); Specht, Christoph, 89231 Pfuhl (DE); Thuault, Sylvain, 69007 Lyon (FR); Schuster, Ralf, 89077 Ulm (DE); Schweiggart, Franz, 89284 Pfaffenhofen (DE)
(74) Vertreter: Pfenning, Meinig & Partner mbB

(56) Entgegenhaltungen:
- EP-A1- 0 125 753
- DE-A1- 1 942 340
- DE-U1-202016 102 418
- US-A- 3 000 433

## Beschreibung

Die vorliegende Erfindung betrifft ein Hitzeschild zur thermischen und/oder akustischen Abschirmung eines Körpers. Sie betrifft weiterhin ein Bauelement mit einem derartigen Körper und einem erfindungsgemäßen Hitzeschild Ein solches Hitzeschild wird beispielsweise in der DE 20 2016 102418 U1 offenbart.

Hitzeschilde werden in vielfältiger Weise eingesetzt, um einen heißen Körper thermisch und/oder akustisch abzuschirmen bzw. um einen anderen Körper von der Wärmestrahlung oder Geräuschen eines Körpers zu schützen. Derartige Hitzeschilde werden insbesondere für Verbrennungsmotoren und damit auch in Fahrzeugen eingesetzt. Bauteile von Verbrennungsmotoren, die mittels Hitzeschilden abgeschirmt werden, sind insbesondere die heißen Bauteile eines Verbrennungsmotors wie beispielsweise Abgasrohre, Katalysatoren, Partikelfilter, Abgaskrümmer, Turbolader und dergleichen. In diesem Falle soll die Umgebung des jeweiligen abgeschirmten Körpers vor der Hitze geschützt und Geräusche des abgeschirmten Körpers gedämpft werden. Gleichzeitig können Hitzeschilde auch dafür genutzt werden, die abgeschirmten heißen Bauteile vor übermäßiger Abkühlung zu schützen.

Hitzeschilde können lediglich auf bestimmte Bereiche des abzuschirmenden Körpers aufgebracht werden. Es ist möglich, diese Hitzeschilde den Körper umlaufend anzuordnen, so dass sich zumindest längs einer Umfangslinie um den Körper ein geschlossener Bereich des Hitzeschildes ergibt. Häufig jedoch werden die Bauteile vollständig, bis auf Ein- und Auslässe der Bauteile, mit einem Hitzeschild abgeschirmt. Beispielsweise werden im Wesentlichen zylinderförmige Partikelfilter oder Katalysatoren von einem im Wesentlichen zylinderförmigen Hitzeschild umgeben. Ebenso gibt es Bauteile, bei denen nicht nur die Bauteile selbst mit dem Hitzeschild abgeschirmt sind, sondern auch Abschnitte von Ein- und/oder Auslass.

Eine typische Bauweise von Hitzeschilden weist eine oder mehrere Teilstücke einer Blechlage als äußere metallische Schale auf, zu der benachbart eine Isolierschicht, beispielsweise aus einem Vlies oder einer anderweitigen Fasermatte, angeordnet ist. Die Isolierschicht liegt unmittelbar auf dem abzuschirmenden Bauteil auf und wird durch die äußere Blechlage des Hitzeschildes an ihrem Platz gehalten und zugleich auch an das abzuschirmende Bauteil angedrückt. Hierzu wird die äußere Blechlage derart um die Isolationsschicht gelegt, dass sie eine Vorspannung aufweist. Ist die Blechlage beispielsweise aus zwei halbzylindrischen Hälften gebildet, so werden diese Hälften an den Verbindungslinien der beiden Hälften mit einer vordefinierten Vorspannung verbunden. Dies kann beispielsweise durch Vernieten oder Verschrauben oder durch Umbördeln der jeweiligen Blechkanten der beiden Hälften miteinander erfolgen.

Zu verschiedenen Einsatzzwecken werden herkömmlicherweise diese Hitzeschilde mit Isolierlagen mit unterschiedlichen Stärken verbaut. Diese unterschiedlichen Stärken der Isolationslagen führen dazu, dass bei unterschiedlichen Isolationsstärken auch unterschiedliche Verpressungen der Isolationslagen mit dem Bauteil erfolgen. Auch das Schwingungsverhalten des Hitzeschildes ändert sich hierdurch. Insgesamt ergibt sich folglich eine jeweils unterschiedliche Verspannung der äußeren Blechlagenelemente miteinander, sofern die Verbindung der Blechlagen längs der Verbindungslinien durch eine vorbestimmte Verbindungsanordnung, d. h. immer in gleicher Weise erfolgt bzw. erfolgen muss. Weitere Toleranzen können sich auf Seiten des Bauteils ergeben, beispielsweise werden Katalysatoren desselben Typs häufig mit unterschiedlichem Durchmesser kalibriert. Die Toleranzen von Bauteil und Isolationslage addieren sich somit üblicherweise.

Eine Kompensation für die erforderliche unterschiedliche Vorspannung bei unterschiedlichen Lagenstärken der Isolationslagen, unterschiedlichen Materialien der Isolationslagen oder Bauteile mit leicht abweichenden Dimensionen erfolgt üblicherweise nicht.

Typischerweise sind die einzelnen Teilstücke der äußeren Metalllage des Hitzeschildes über Flansche miteinander verbunden, die an den benachbart zueinander verlaufenden Kanten (d. h. Kanten senkrecht zur auf die um den Körper erfolgende Umlaufrichtung der Schale) der Teilstücke der metallischen Schale ausgebildet sind. Diese Flansche können miteinander vernietet oder verschraubt oder an ihrer Außenkante umgebördelt werden. Die Kraftverbindungspunkte zwischen beispielsweise einer Ober- und einer Unterschale eines zylinderförmigen Hitzeschildes sind daher von der Isolationslage und den oben definierten Außenkanten der Teilstücke radial weit beabstandet. Mit anderen Worten verläuft der Kraftfluss im Bereich der Flansche zwischen den beiden Halbschalen beabstandet vom abzuschirmenden Körper und beabstandet von der Isolationslage. Hierdurch entstehen hohe Biegekräfte auf die Flansche, was zu einem Auffedern eines oder mehrerer Flansche(s) führen kann. Ein derartiges Auffedern hat jedoch den Nachteil, dass an diesen aufgebogenen Bereichen zwischen den Teilstücken der metallischen Schale des Hitzeschildes keine definierte Vorspannung vorliegt und die Isolation des abzuschirmenden Körpers reduziert oder aufgehoben ist.

Aufgabe der vorliegenden Erfindung ist es daher, ein Hitzeschild zu schaffen, bei dem eine konstante Vorspannung der Verbindung von einzelnen Teilen des Hitzeschildes gewährleistet ist, auch unabhängig von der Dicke oder dem Material benachbarter Isolationsschichten oder geringen Abweichungen in den Dimensionen des abzuschirmenden Körpers. Das erfindungsgemäße Hitzeschild soll kein Auffedern aufweisen, so dass dauerhaft eine gute Verpressung mit hervorragender Wärmeleitfähigkeit und hervorragendem Schwingungsverhalten gewährleistet ist. Weiterhin ist es Aufgabe der vorliegenden Erfindung, ein Bauelement zur Verfügung zu stellen mit einem abzuschirmenden Körper und einem daran angeordneten erfindungsgemäßen Hitzeschild.

Diese Aufgabe wird durch das Hitzeschild nach Anspruch 1 und das Bauelement nach Anspruch 11 gelöst. Vorteilhafte Weiterbildungen des erfindungsgemäßen Hitzeschildes und des erfindungsgemäßen Bauelementes werden in den jeweiligen abhängigen Ansprüchen gegeben.

Das erfindungsgemäße Hitzeschild dient der thermischen und/oder akustischen Abschirmung eines Körpers. Es weist eine metallische Lage auf, die den Körper derart umgreifen kann, dass zwei gegenüberliegende Außenkanten der metallischen Lage benachbart zueinander angeordnet und zum Schließen des Umgriffs um den Körper miteinander verbindbar oder verbunden sind. Als Außenkanten werden hier nicht nur die eigentlichen freien Kanten verstanden, sondern die Randbereiche, die im Verbindungsbereich über den eigentlichen Körper des Hitzeschildes überstehen. Die Außenkanten definieren z. B. das äußere Ende der metallischen Lage in Umfangsrichtung um einen zylindrischen Körper, d. h. in radialer Richtung zur Längsachse des zylindrischen Körpers. Beispielsweise kann das Hitzeschild mit einer zylinderförmigen metallischen Lage versehen sein, die senkrecht zur Zylinder-Längsachse nach Umlegen der metallischen Lage um den Körper zwei zueinander benachbart liegende Außenkanten aufweist. An diesen Außenkanten kann die metallische Lage zusammengefügt werden, so dass der Umgriff um den Innenraum des Zylinders von der metallischen Lage geschlossen wird.

Im Folgenden werden eine Vielzahl von Merkmalen des erfindungsgemäßen Hitzeschildes am Beispiel eines zylinderförmigen Hitzeschildes, beispielsweise für einen zylinderförmigen Katalysator oder einen zylinderförmigen Partikelfilter geschildert. Tatsächlich kann die vorliegende Erfindung bei jeder Art von Hitzeschild, das einen Körper umgreift, eingesetzt werden.

Erfindungsgemäß weist das Hitzeschild an mindestens einer der Außenkanten einen nach außen abgekanteten Flansch auf. Dieser Flansch ragt also im Wesentlichen radial von der Außenkante weg nach außen. Der Flansch weist unmittelbar benachbart zu der Abkantung des Flansches mindestens eine Durchgangsöffnung auf.

An der korrespondierenden zweiten Außenkante ragt weitgehend parallel zu einem der ersten Außenkante naheliegenden und zur Abkantung benachbarten, nicht abgekanteten Bereich der metallischen Lage eine Lasche vor, die derart positioniert ist, dass sie durch die Durchgangsöffnung in dem oben genannten Flansch durchführbar oder nach fertiger Montage durchgeführt ist. Diese Lasche wird nun hinter der Durchgangsöffnung mit dem nach außen abgekanteten Flansch bzw. der ersten Außenkante verbunden bzw. ist damit verbunden.

Insbesondere dadurch, dass die Durchgangsöffnung benachbart, vorteilhafterweise unmittelbar benachbart zu der Abkantung zur Ausbildung des Flansches angeordnet ist, und die Durchgangsöffnung von einer Lasche der zweiten Außenkante durchgriffen und hinter dieser mit der ersten Außenkante bzw. deren Flansch verbunden ist, werden die erste Außenkante und die zweite Außenkante benachbart zueinander und radial relativ zur eigentlichen ersten Außenkante innenliegenden Bereich des Flansches miteinander verbunden. Hierdurch ist kein oder zumindest nur noch ein geringes Auffedern möglich, so dass auch bei Einsatz eines mit einer Isolationsschicht versehenen Hitzeschildes eine konstante Vorspannung hergestellt werden kann. Insbesondere ist es auch möglich, durch die nachfolgend dargestellten Verbindungsmöglichkeiten zwischen Lasche und Flansch einen Toleranzausgleich für variable Dicken einer benachbarten Fasermatte bzw. für Variationen in den Außenmaßen des Bauteils oder des Hitzeschildes zu ermöglichen.

Insgesamt verlaufen die Kraftlinien der Verbauvorspannung nunmehr möglichst eng an einer gegebenenfalls vorhandenen Isolierlage oder einem abgeschirmten Bauteil, so dass deutlich verringerte Biegekräfte auf die Lasche und den Flansch ausgeübt werden. Hierdurch wird zum einen eine gute Verpressung gewährleistet, die dauerhaft erhalten werden kann, so dass eine optimale Wärmeleitfähigkeit und ein konstantes Schwingungsverhalten des Hitzeschildes während des Betriebs des Hitzeschildes gewährleistet wird.

Die Lasche kann beispielsweise mit der ersten Außenkante verschweißt oder verlötet werden. Insbesondere ist es möglich, die Lasche mit dem Flansch formschlüssig zu verbinden, beispielsweise indem die Lasche nach Durchtritt durch die Durchgangsöffnung hinter der Durchgangsöffnung umgefalzt und/oder mit dem Flansch verbördelt wird. Zur formschlüssigen Verbindung ist nicht nur ein Umfalzen und Bördeln möglich, sondern die Lasche kann auch gegebenenfalls gemeinsam mit dem Flansch gewickelt werden. Es ist auch möglich, die Lasche in Durchtrittsrichtung durch die Durchgangsöffnung hinter der Durchgangsöffnung in sich zu verdrehen oder um die Außenkante des Flansches zu verdrehen und hierdurch eine formschlüssige Verbindung von Lasche und Flansch zu schaffen.

Dadurch, dass die Lasche keinen festen geometrischen Anschlag aufweist, ist es möglich, eine konstante bzw. immer gleiche Vorspannung auch bei unterschiedlichen Dicken oder Materialien einer zwischen der Metalllage und dem abzuschirmenden Körper verwendeten Isolationslage zu gewährleisten. Hierzu wird die Einstecktiefe variiert, was zu einer Variation des Abstands der zwischen dem eigentlichen Hitzeschild und der Verbindungsstelle liegenden Abschnitte der Flansche führt. Die Flansche liegen also in diesen Abschnitten nicht in jedem Fall aufeinander, sondern können auch voneinander beabstandet sein.

Die metallische Lage des erfindungsgemäßen Hitzeschildes muss nicht einteilig sein und lediglich eine Verbindungslinie längs ihrer Flanschrichtung aufweisen. Auch zweiteilige metallische Lagen oder metallische Lagen aus mehr als zwei Teilen sind möglich, wobei die oben beschriebenen Verbindungstechniken auf jede der Verbindungen verschiedener Teile der metallischen Lage angewandt werden können.

Die Lasche kann zusätzlich gegen ein Lösen gesichert werden, indem sie neben der oben beschriebenen Verbindung mit dem Flansch der ersten Außenkante zusätzlich durch ein weiteres Verfahren mit dem Flansch verbunden wird, beispielsweise durch eine zusätzliche Verschweißung oder Verlötung, Verbördelung etc.

Längs der ersten Außenkante kann eine Durchgangsöffnung oder können auch mehrere Durchgangsöffnungen angeordnet sein. Die zweite Außenkante weist entsprechend eine oder mehrere Laschen auf, wobei es auch möglich ist, für eine Durchgangsöffnung zwei oder mehr Laschen vorzusehen, die sämtlich durch eine der Durchgangsöffnungen hindurch geführt werden. Ebenso kann das Hitzeschild mit identischer Anzahl Laschen und Durchgangsöffnung ausgeführt sein.

Die Durchgangsöffnungen werden vorzugsweise schlitzförmig ausgebildet. Besonders vorteilhaft ist, wenn eine Durchgangsöffnung als geradlinig verlaufender Schlitz ausgebildet ist. Insbesondere Schlitze mit einer Länge und einer Breite, die zumindest geringfügig größer ist, als die Breite und die Dicke der Laschen, die durch die jeweilige Durchgangsöffnung hindurch geführt werden sollen, sind vorteilhaft. Beispielsweise kann eine Durchgangsöffnung eine Länge aufweisen, die um 0,5 bis 20 % größer, vorteilhafterweise um 10 % größer ist als die Breite der zugehörigen, durch diese Durchgangsöffnung hindurchzuführenden Lasche der zweiten Außenkante.

Wie bereits erwähnt, kann auf der Innenseite der metallischen Lage eine Isolationslage angeordnet sein. Bei einem Hitzeschild mit sog. Direktisolation bildet die Isolationslage zumindest bereichsweise die innerste, unmittelbar dem abzuschirmenden Körper benachbart angeordnete Lage des Hitzeschildes. Für derartige Isolationsschichten eignen sich Vliese, insbesondere Nadelvliese, insbesondere Nadelvliese aus Glasfasern wie E-Glasfasern, ECR-Glasfasern und/oder Silikatfasern. Neben binderfreien Vliesen können auch solche Vliese eingesetzt werden, bei denen die Glasfasern zumindest abschnittsweise mittels eines Binders miteinander verbunden sind. Bevorzugte Dicken DV der Isolationsschicht betragen 3 mm ≤ DV ≤ 20 mm, vorteilhafterweise 6 mm ≤ DV ≤ 12 mm. Die Isolationsschicht kann bereits vor Einlage in das Hitzeschild oder Auflage auf den abzuschirmenden Körper als Formteil gefertigt werden oder auch erst später gemeinsam mit Hitzeschild und abzuschirmendem Körper in die geeignete Form gebracht werden. Üblicherweise weist die Isolationsschicht keine Laschen und keine Flansche auf.

Die Durchgangsöffnung in dem Flansch der ersten Außenkante kann nicht nur als gerader parallel zu dieser Außenkante verlaufender Schlitz ausgebildet werden, sondern auch gegenüber der Längsrichtung der Außenkante und/oder der Biegelinie der Abkantung unter einem Winkel α schrägstehend ausgebildet sein.

Das erfindungsgemäße Hitzeschild eignet sich insbesondere zum Abschirmen von heißen Bauteilen an und in Verbrennungsmotoren, beispielsweise Abgasrohre, Katalysatoren, Partikelfiltern, Turboladern, Abgaskrümmern oder SCR-Katalysatoren.

Die vorliegende Erfindung erstreckt sich daher auch auf ein Bauelement mit einem abzuschirmenden Körper, beispielsweise einem Teil eines Verbrennungsmotors wie vorstehend beschrieben, sowie mit einem erfindungsgemäßen Hitzeschild. Das erfindungsgemäße Hitzeschild umgreift den Körper und ist an mindestens zwei gegenüberliegenden Außenkanten seiner metallischen Lage, die benachbart zueinander angeordnet sind, miteinander verbunden, insbesondere formschlüssig und/oder stoffschlüssig verbunden. Die Außenkanten des Hitzeschilds können dabei abschnittsweise bündig zueinander und/oder abschnittsweise einander überlappend verlaufen.

Im Folgenden werden einige Beispiele erfindungsgemäßer Hitzeschilde sowie erfindungsgemäßer Bauelemente beschrieben. Dabei bezeichnen in den einzelnen Beispielen gleiche oder ähnliche Bezugszeichen gleiche oder ähnliche Elemente, so dass deren Erläuterung nicht immer wiederholt wird. In den nachfolgenden Beispielen sind auch für die Erfindung nicht wesentliche Merkmale beschrieben. Diese sind neben den gemäß Anspruch 1 wesentlichen Merkmalen optionale und vorteilhafte Merkmale. Diese können für sich einzeln als auch in Kombination mit weiteren derartigen Merkmalen aus dem jeweiligen Beispiel oder auch mit weiteren derartigen Merkmalen aus anderen Beispielen in Kombination erfindungsgemäß eingesetzt werden.

Es zeigen
- Figur 1: einen Katalysator mit einem Hitzeschild als erfindungsgemäßes Bauelement;
- Figur 2: eine Aufsicht auf das Hitzeschild sowie einen Schnitt durch die metallische Lage des Hitzeschilds gemäß Figur 1;
- Figuren 3-10: verschiedene Verbindungen benachbarter Außenkanten verschiedener erfindungsgemäßer Hitzeschilde.

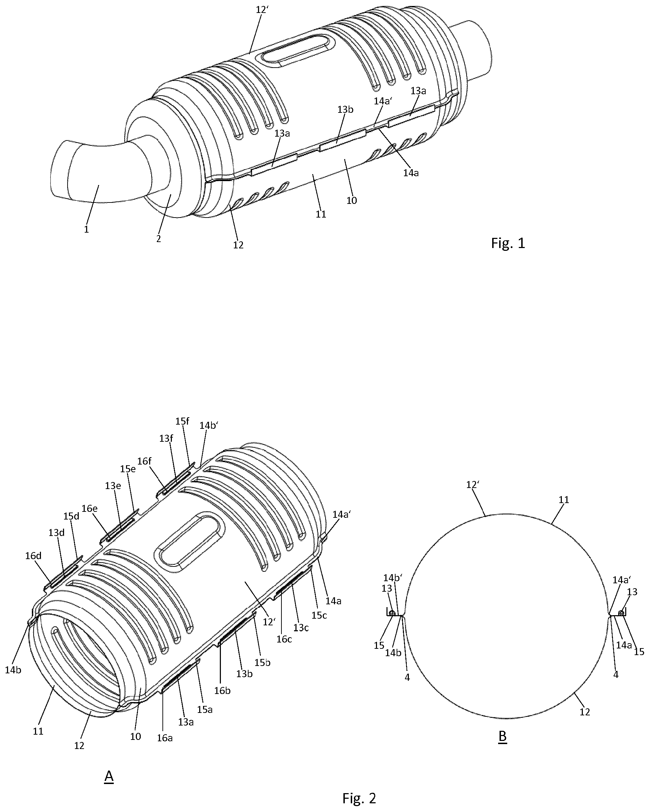

Figur 1 zeigt ein Abgasrohr 1 und einen Katalysator 2, der in das Abgasrohr 1 eingebaut ist und zur Reinigung von in dem Abgasrohr 1 geführten Verbrennungsgasen von Schadstoffen dient. Dieser Katalysator 2 weist eine im Wesentlichen zylindrische Außenform auf. Diese Außenform kann von der zylindrischen Außenform in strengem Sinne abweichen, so nehmen beispielsweise zu den Enden des Katalysators 2 hin dessen Durchmesser und damit auch dessen Umfang ab.

Der Katalysator ist von einem Hitzeschild 10 gemäß der vorliegenden Erfindung umgeben. Das Hitzeschild 10 weist eine metallische Lage 11 mit zwei Hälften 12 und 12' auf, die längs zweier benachbarter Außenkanten 14a, 14a' an Verbindungsstellen 13a, 13b, 13c miteinander verbunden sind.

Figur 2 zeigt in Teilbild A das Hitzeschild 10 gemäß Figur 1 in geänderter Aufsicht, mit der metallischen Lage 11 mit zwei Lagenhälften 12, 12' (Oberschale 12' und Unterschale 12). Beide Lagenhälften 12, 12' sind an benachbart zueinander verlaufenden Außenkanten 14a, 14a' sowie 14b, 14b' miteinander verbunden. Als Außenkanten werden hier nicht nur die eigentlichen freien Kanten verstanden, sondern die Randbereiche, die im Verbindungsbereich über den eigentlichen Körper des Hitzeschildes überstehen. Längs dieser Außenkanten sind Verbindungsstellen 13a, 13b und 13c bzw. 13d, 13e und 13f vorgesehen. An diesen Verbindungsstellen weist die Lagenhälfte 12 nach außen abgekantete Flansche 15a, 15b, 15c bzw. 15d, 15e, 15f auf. Die Flansche 15a bis 15f sind jeweils mit längs der Außenkanten 14a, 14b und der innersten Kontakt- bzw. Verbindungslinie 4 zwischen den Außenkanten 14a und 14a' bzw. 14b und 14b' verlaufenden schlitzförmigen Durchgangsöffnungen 16a bis 16f versehen. In Figur 2 nicht deutlich zu erkennen verlaufen diese schlitzförmigen Ausnehmungen 16a bis 16f dicht an der innersten Kontakt- bzw. Verbindungslinie 4 zwischen den Außenkanten 14a und 14a' bzw. 14b und 14b' der beiden Lagenhälften 12, 12', insbesondere radial möglichst weit innenliegend.

Durch diese Verbindungsöffnungen 16a bis 16f sind Laschen, die aus der Außenkante der Hälfte 12 in Umfangsrichtung hervorragen, hindurch gesteckt und hinter der jeweiligen Durchgangsöffnung 16a bis 16f umgefalzt. Hierdurch wird ein Formschluss zwischen der jeweiligen Lasche und dem jeweiligen Flansch 15a bis 15f ausgebildet. Da die Lasche erst bei Befestigung des Hitzeschildes 10 an dem abzuschirmenden Bauteil 2 umgefalzt wird, liegt zuvor kein fester geometrischer Anschlag, der bereits zuvor vorgegeben wurde, zwischen den Laschen und den Flanschen 15a bis 15f vor. Der Verbindungspunkt wird vielmehr an seiner korrekten Position erst nach Anlegen des Hitzeschildes 10 an das abzuschirmende Bauteil 2 ausgebildet. Folglich können bei der Montage die beiden Hälften 12 und 12' der metallischen Lage 11 mit einer vorgegebenen Kraft miteinander verpresst werden und unter dieser Vorspannung der Verbindungspunkt zwischen den beiden Hälften 12 und 12' bzw. die Verbindungspunkte zwischen den beiden Hälften 12 und 12' ausgebildet werden. Es ist also möglich, auch bei Variationen im Durchmesser des abzuschirmenden Bauteils 2 oder bei Einlegen unterschiedlich dicker oder mit unterschiedlichem Material hergestellter Isolierlagen in das Hitzeschild 10 die Verbindung der beiden Hälften 12 und 12' immer mit einer vordefinierten, ggf. gleichbleibenden, Vorspannung miteinander zu verbinden.

Die Verbindung der beiden Hälften 12 und 12' ist auch in Teilbild B gezeigt, wobei hier nur die metallische Lage 11 geschnitten dargestellt ist. Aus dieser Schnittdarstellung wird deutlich, dass die beiden Hälften 12, 12' grundsätzlich so miteinander verbunden werden können, dass die Flansche 15, 15' bzw. Außenkanten 14, 14' auch im von der zwischen der Verbindungsstelle 13 ins Innere des Hitzeschildes reichenden Bereich flächig aufeinander liegen können.

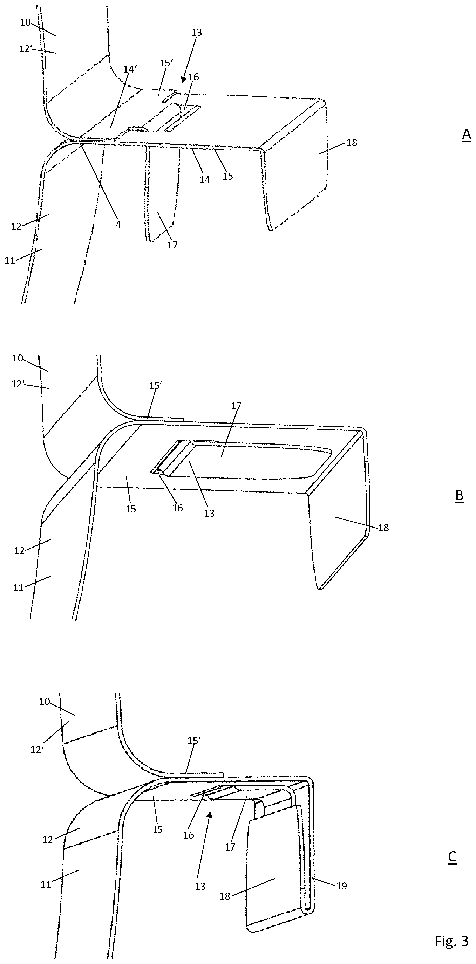

Figur 3 zeigt nun in den Teilfiguren A bis C einen erfindungsgemäßen Verbindungspunkt 13 in verschiedenen Ansichten zu verschiedenen Zeitpunkten der Montage des zugehörigen Hitzeschildes 10. Figur 3 zeigt in den Teilfiguren A bis C den Verbindungsprozess zwischen einer Lasche 17 einer oberen Halbschale 12', beispielsweise einer oberen Blechlagenhälfte, und einem Flansch 15 einer unteren Halbschale 12 der Blechlage 11. Auch die obere Lagenhälfte 12' weist einen kurzen Flansch 15' auf, der jedoch erheblich kürzer ist als der Flansch 15. An dem Ende des Flansches 15' befindet sich die Lasche 17, die in einem ersten Schritt durch eine schlitzförmig ausgebildete Öffnung 16 hindurchgeschoben wird. Nach Durchtritt durch die Öffnung 16 wird die Lasche 17 wie in Figur B in Untersicht dargestellt parallel zum Flansch 15 abgekantet und an den Flansch 15 flach angelegt. Das äußere Ende 18 des Flansches 15 wurde bereits vor dem Zusammenfügen der beiden Hälften 12 und 12' in Richtung der oberen Halbschale 12 abgekantet.

In einem letzten Schritt der Verbindung, siehe Fig. 3C, der beiden Hälften 12 und 12' miteinander, wird nun der Flansch 15 in einen Bereich, in dem die Lasche 17 an ihm anliegt, umgefalzt zur Ausbildung eines abgekanteten Bereiches 19. Dabei wird auch die Lasche 17 abgekantet. Zuletzt wird das Ende 18 weiter um 90° umgefalzt, so dass das abgekantete Ende der Lasche 17 zwischen den Bereichen 18 und 19 fixiert ist. Weiterhin kann der dreilagige Bereich mit dem Endabschnitt 18, dem Abschnitt 19 und dem dazwischen befindlichen Ende der Lasche 17 nochmals um 90° in Richtung des Flansches 15 umgebogen und an diesem angelegt werden (nicht dargestellt). Vorteilhaft an der vorliegenden Ausführungsform ist, dass der Kraftverbindungspunkt zwischen unterer Schale 12 und oberer Schale 12' dicht am abzuschirmenden Bauteil ist. Hierdurch sind die auf den Verbindungspunkt wirkenden Kräfte gering, so dass der Verbindungsbereich 13 zwischen den Halbschalen 12 und 12' nicht auffedert. Ein weiterer Vorteil dieser Ausführungsform ist, dass die Vorspannung der Verbindung der beiden Halbschalen 12, 12' beim Verbinden vorgegeben werden kann. Abhängig von der Vorspannung wird die Lasche 17 unterschiedlich weit durch die Öffnung 16 geführt und dann abgekantet. Eine starre Geometrie der Verbindung 13 wird folglich vermieden. Das hier dargestellte Beispiel weist die maximale Einführtiefe der Lasche 17 durch die Öffnung 16 auf.

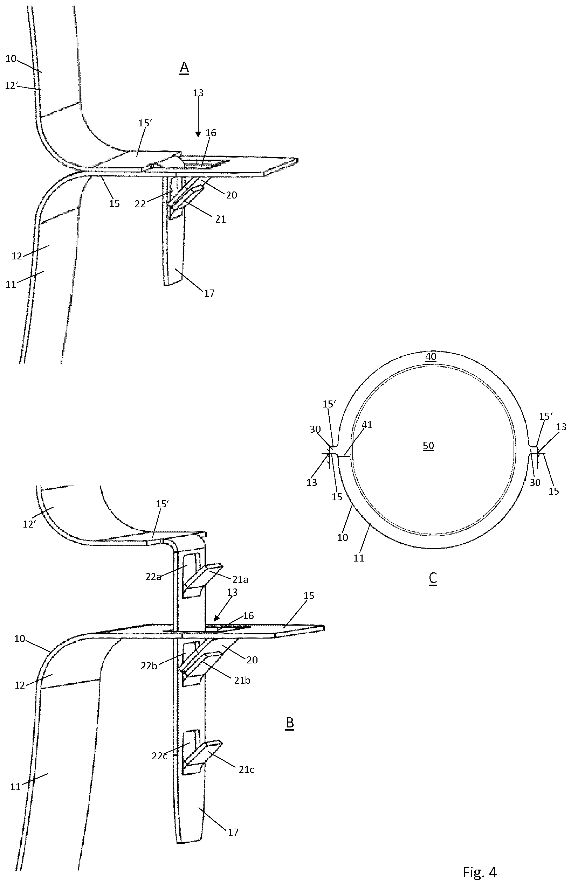

Figur 4A zeigt eine weitere Ausführungsform eines Hitzeschildes 10 ähnlich derjenigen in Fig. 3. Allerdings ist aus dem Flansch 15 des ersten Teils 12 eine weitere Lasche 20 in Richtung der Durchführung der Lasche 17 durch die Öffnung 16 ausgebogen. Diese Lasche 20 bildet ein Rastelement, hinter das ein in gegenläufiger Richtung aus der Lasche 17 unter Ausbildung einer Aussparung 22 ausgebogenes Rastelement 21 eingreift. Hierdurch wird ein Zurückgleiten der Lasche 17 aus der Öffnung 16 zuverlässig verhindert. Gegebenenfalls kann die Lasche 20 auch so ausgebildet werden, dass sie durch die Öffnung 22, die durch die Ausbildung des Rastelements 21 in der Lasche 17 entstanden ist, hindurchtreten kann.

Figur 4B zeigt eine weitere Ausführungsform eines Hitzeschildes 10 mit einem Verbindungspunkt entsprechend der Verbindungstechnik in Figur 4A. Nunmehr sind jedoch aus der Lasche 17 in Durchführungsrichtung der Lasche 17 durch die Öffnung 16 hintereinander angeordnet eine Vielzahl, hier genau drei, Rastelemente 21a, 21b und 21c unter Ausbildung von Öffnungen 22a, 22b und 22c ausgenommen. Dies ermöglicht es, beim Verbinden der beiden Teile 12 und 12' des erfindungsgemäßen Hitzeschildes 10 die Lasche 17 möglichst weitgehend durch die Öffnung 16 zu schieben, bis eine vorbestimmte Vorspannung zwischen den Teilen 11 und 12 erreicht ist. Dann wird das entsprechende Rastelement, hier Rastelement 21b, in Eingriff mit der Lasche 20 gebracht und so die Lasche 17 am Flansch 15 arretiert. Die Ausführungsform der Figur 4B verdeutlicht, dass auch ohne ein flächiges Anliegen der Außenkanten 14, 14' bzw. Bereiche beider Hälften 12, 12', die jeweils zwischen dem eigentlichen Verbindungspunkt 13 und dem inneren Anfang der Flansche 15, 15' liegen, eine dauerhafte und gezielt vorgespannte Verbindung der beiden Hälften 12, 12' möglich ist.

Dies wird auch aus der Schnittdarstellung der Figur 4C deutlich, in der das Hitzeschild 10 um einen Körper 50 herum angeordnet ist. Während die Isolierlage 40 geschlossen am Körper 50 anliegt und seine Enden an der Linie 41 bündig aneinanderstoßen, erfolgt der Ringschluss der beiden Hälften 12, 12' der metallischen Lage 11 nur über die Flansche 15, 15', so dass zwischen diesen und dem äußeren Rand der Isolierlage 40 jeweils ein Freiraum 30 verbleibt. Dieser würde bei einem Katalysator mit geringerem Durchmesser geringer ausfallen, die Verbindung würde zwischen dem Rastelement 21a und der Lasche 20 erfolgen. Bei einem Katalysator mit größerem Durchmesser würde er hingegen größer ausfallen, die Verbindung käme bereits zwischen dem Rastelement 21c und der Lasche 20 mit maximal möglicher Vorspannung zustande.

Bei den nachfolgenden Ausführungsbeispielen ist bei den Detailansichten der jeweiligen Verbindungsstelle 13 nur die metallische Lage dargestellt, so dass die Flansche 15, 15' jeweils auch im Bereich zwischen der Verbindungsstelle und dem Inneren des Hitzeschildes aufeinander aufliegen. Bei Verbau mit einer dickeren Isolierlage oder einem dickeren Bauteil ist dies jedoch üblicherweise nicht so vorgesehen. Der flächige Kontakt ergibt sich im vollständig verbauten Zustand üblicherweise nur bei Verwendung einer dünnen Isolierlage und/oder eines dünnen Katalysators, wobei bei der Auslegung der Länge der Laschen 17 etc. die maximale Schwankungsbreite der Dicke der Isolierlage bzw. des Katalysators oder sonstigen Bauteils berücksichtigt wird.

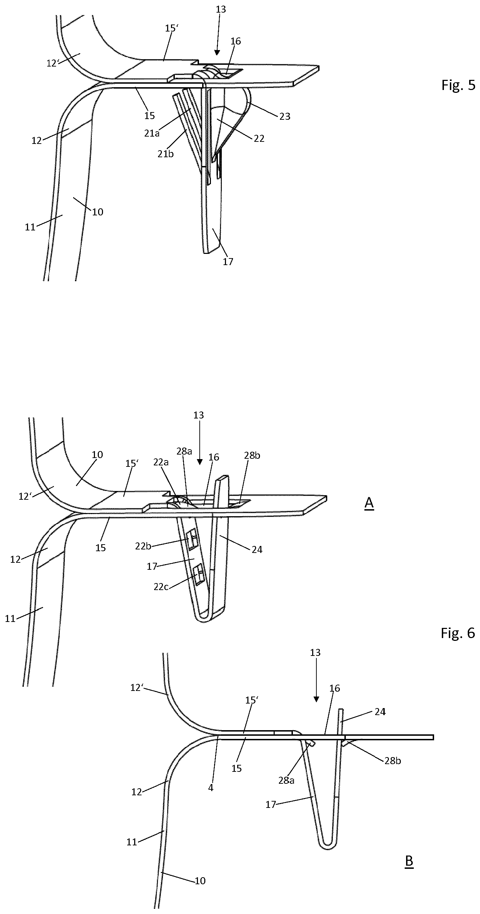

Figur 5 zeigt eine Verbindungsstelle 13 eines weiteren erfindungsgemäßen Hitzeschildes. Die Verbindungsstelle 13 ist ähnlich derjenigen in Figur 4 ausgebildet. Die Lasche 17 weist nunmehr nicht ein Rastelement, sondern zwei parallel zueinander und in Richtung quer zur Längserstreckung der Lasche 17 nebeneinander angeordnete Rastelemente 21a und 21b auf. Diese sind aus der Lage der Lasche 17 ausgebogen und verhindern ein Zurückgleiten der Lasche 17 durch die Öffnung 16, indem sie benachbart zur Öffnung 16 den Flansch 15 hintergreifen. Zwischen den beiden Rastelementen 21a und 21b ist zur entgegengesetzten Seite, d. h. in Richtung des Endes des Flansches 15 aus der Lage der Lasche 17 eine Federzunge als Federelement 23 ausgebogen. Dieses Federelement 23 steht in Richtung des Endes des Flansches 15 aus der Lasche 17 vor und hintergreift den Flansch 15 benachbart zu der Öffnung 16. Das Federelement 23 ist dabei an seinem oberen Ende abgerundet, so dass es nach Durchgriff der Lasche 17 durch die Öffnung 16 einen Anschlag an und Hintergriff des Flansches 15 bildet.

Durch das Federelement 23 wird ein Hintergriff der Lasche 17 hinter den Flansch 15 mit einer definierten Vorspannung bewirkt. Die Rastelemente 21a und 21b verhindern auch bei größeren Kräften ein Lösen der Verbindungsstelle 13.

Figur 6 zeigt in den Teilbildern A und B eine Aufsicht sowie einen Querschnitt durch eine Verbindungsstelle 13 eines weiteren Beispiels eines erfindungsgemäßen Hitzeschildes 10. Dieses ist ähnlich demjenigen in Figur 4A ausgebildet. Die Lasche 17 ist nunmehr jedoch zur Ausbildung eines Rastelementes 24 an ihrem Ende nahezu vollständig nach oben und außen umgebogen. Dieses Rastelement 24 greift ggf. beim Durchtritt durch die Öffnung 16 hinter den Flansch 15 und verhindert so ein Lösen der Verbindungsstelle 13. Er kann jedoch auch so ausgebildet sein, dass die Lasche 17 mit ihren beiden weitgehend einander gegenüberliegenden Endabschnitten eine Federkraft auf die in Längsrichtung des Flansches 15 liegenden Kanten der Öffnung 16 ausübt. Beim vorliegenden Beispiel der Figur 6 sind diese Kanten derart ausgestaltet, dass an ihnen Klemmzungen 28a und 28b ausgebildet sind, die aus der Ebene des Flansches 15 in Richtung der Lasche 17 gebogen sind.

In dem aus der Ebene der Lasche 17 ausgebogenen, durch die Öffnung 16 tretenden Abschnitt der Lasche 17 sind in Erstreckungsrichtung der Lasche 17 drei Öffnungen 22a, 22b sowie 22c ausgestanzt.

Beim Durchschieben der Lasche 17 durch die Öffnung 16 greift die Klemmzunge 28a sukzessive in die Öffnungen 22c, 22b und zuletzt, wie in Figur 6A und in Figur 6B dargestellt, in die Öffnung 22a ein. Damit wird die Lasche 17 mit dem Flansch 15 verrastet. Dadurch, dass drei Öffnungen 22a, 22b und 22c vorgesehen sind, kann die Lasche 17 abhängig von beispielsweise der Dicke einer zusätzlichen Isolierlage zwischen der metallischen Außenlage 11 des Hitzeschildes 10 und dem abzuschirmenden Bauteil in unterschiedlichem Maß in die Öffnung 16 eingeführt werden, bis eine vordefinierte Vorspannung zwischen dem Flansch 15 und der Lasche 17 erreicht ist. Bei einer dickeren Isolierlage könnte die Verrastung beispielsweise mit der Öffnung 22b erfolgen.

Die Klemmzunge 28b stützt sich auf dem Rastelement 24 ab und verhindert so ein Lösen der Lasche 17.

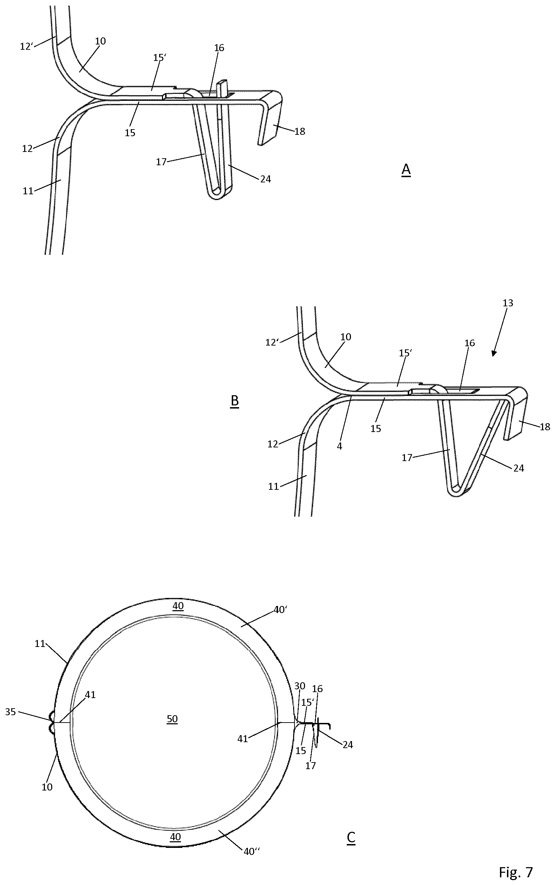

Figur 7 zeigt eine weitere Ausführungsform eines erfindungsgemäßen Hitzeschildes 10 im Ausschnitt um eine Verbindungsstelle 13.

Diese Ausführungsform der Figur 7 ist ähnlich derjenigen in Figur 6, wobei jedoch keine Klemmzungen 28a, 28b und keine Öffnungen 22a, 22b, 22c vorgesehen sind. Vor oder nach Hintergreifen des Klemmelementes 24 hinter den Flansch 15 wird jedoch zusätzlich das äußere Ende 18 des Flansches 15 umgebogen und verhindert so ein seitliches Abrutschen des Klemmelementes 24 in radialer Richtung. Damit wird die Halbschale 12' bezüglich der Halbschale 12 auch in radialer Richtung des Hitzeschildes 10 festgelegt. Figur 7C stellt einen Schnitt durch ein verbautes Hitzeschild 10 an einem Katalysator 50 minimalen Durchmessers und mit einer dünnen Isolierschicht 40 dar, wobei die metallische Lage 11 nur aus einem einzigen Teil besteht, das mittels eines eingeformten Scharniers 35 seine Flexibilität erhält. Die Isolierschicht besteht aus zwei Abschnitten 40', 40", die flächig auf dem abzuschirmenden Körper 50 anliegen. Durch die Größe der inneren Bauteile 40, 50 am unteren Ende des jeweiligen Toleranzbereichs resultiert ein Verbau der metallischen Lage 11 mit ausreichender Vorspannung bei maximalem Einschub der Lasche 17. Der Freiraum 30 zwischen den Außenkanten 14, 14' ist minimal und resultiert nur aus den Übergangsradien. Wie Teilbild A zeigt auch Teilbild C einen Zustand, in dem die Verbindungsstelle 13 noch nicht vollständig verrastet ist.

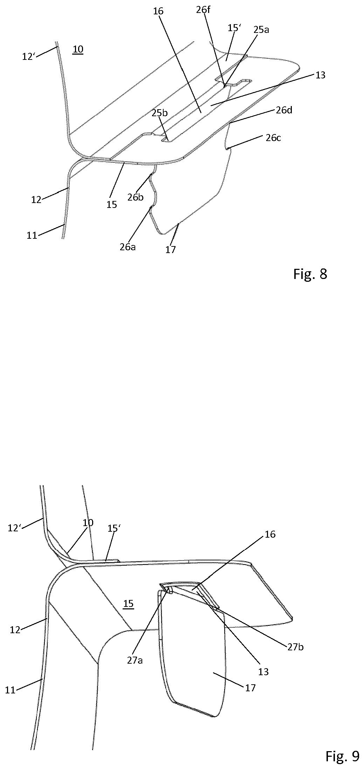

Figur 8 zeigt eine weitere Ausführungsform eines Hitzeschildes 10 im Ausschnitt um eine Verbindungsstelle 13. Bei dieser Ausführungsform, die grundsätzlich ähnlich ist wie diejenige in Figur 3, weist die Öffnung 16 einen schmalen Bereich 25a und einen breiteren Bereich 25b auf. Die Lasche 17 weist seitliche Rastnasen 26a bis 26d und ein weiteres Rastnasenpaar mit der dargestellten Rastnase 26f und einer durch den Flansch 15 verdeckten Rastnase (26e) auf, die in Erstreckungsrichtung der Lasche 17 jeweils paarweise zu beiden Seiten der Lasche 17 angeordnet sind. Die Breite der Lasche im Bereich der Rastnasen, beispielsweise der Rastnasen 26a und 26c bzw. der Rastnasen 26b und 26d ist geringer als die Breite des breiten Bereiches 25b der Öffnung 16, jedoch größer als die Breite des schmalen Bereichs 25a der Öffnung 16. Daher kann die Lasche 17 in diesem Breitenbereich 25b durch die Öffnung 16 hindurch geführt werden. Die Breite der Lasche 17 zwischen Paaren an Rastnasen, also beispielsweise zwischen den Rastnasen 26a und 26b auf der einen und 26c und 26d auf der anderen Seite der Lasche 17 ist kleiner als die Breite des schmalen Bereiches 25a der Öffnung 16. Nach Durchführen der Lasche 17 durch die Öffnung 16 kann diese daher in dem schmalen Bereich 25a der Öffnung 16 verrastet werden.

Je nach gewünschter Vorspannung kann dabei die Lasche 17 mit dem Rastnasenpaar 26a, 26c, dem Rastnasenpaar 26b, 26d oder wie in Figur 8 dargestellt mit einem dritten, in der Aufsicht in Fig. 8 nicht vollständig zu erkennenden Rastnasenpaar 26e, 26f, in der Öffnung 16 verrastet werden.

Figur 9 stellt ein weiteres erfindungsgemäßes Hitzeschild 10 in Aufsicht im Ausschnitt um eine Verbindungsstelle 13 dar.

Diese Verbindungsstelle ist ähnlich ausgestaltet, wie diejenige in Figur 3. Allerdings ist die Breite der Lasche 17 so gewählt, dass diese breiter ist als die Breite der Öffnung 16. Andererseits weist die Öffnung 16 eine Breite und Länge auf derart, dass die Lasche 17 diagonal durch die Öffnung 16 hindurchgeführt werden kann.

Die Lasche 17 weist weiterhin an ihren beiden Seitenkanten Einschnitte 27a und 27b auf, in denen die Breite der Lasche 17 so verringert ist, dass sie geringer ist als die Breite der Öffnung 16. Dadurch ist es möglich, die Lasche 17 in der Öffnung 16 mit dem Flansch 15 zu verrasten, indem sie nach Durchführung durch die Öffnung 16 in gedrehter Position anschließend mit ihrer Breitenerstreckung parallel zur Längsrichtung der Öffnung 16 gedreht wird und die Endkanten der Öffnung 16 die Einschnitte 27a und 27b überragen.

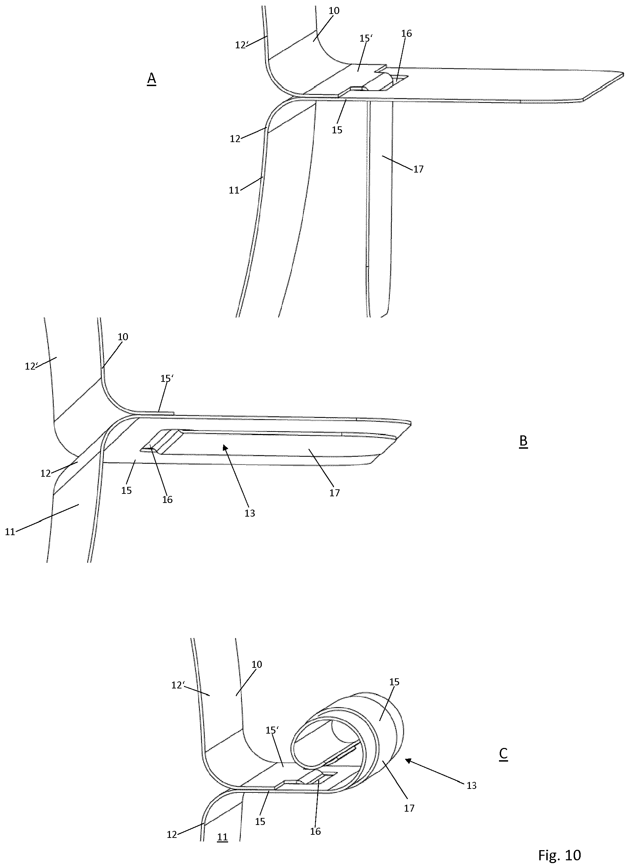

Figur 10 zeigt in den Teilbildern A, B und C ein weiteres erfindungsgemäßes Hitzeschild 10 in drei Aufsichten auf eine Verbindungsstelle 13 in aufeinanderfolgenden Zuständen während der Verbindung einer Unterschale 12 mit einer Oberschale 12'.

Diese Ausführungsform ist ähnlich wie diejenige in Figur 3 ausgestaltet. Die Darstellung in den Figuren 10a und 10b entspricht derjenigen in Figuren 3a und 3b. Unterschiedlich zu der Ausführungsform in Figur 3 weist der Flansch 15 jedoch keinen abgekanteten Endabschnitt 18 auf.

Im Unterschied zu der Ausführungsform in Figur 3 wird hier nun, nachdem die Lasche 17 zum Flansch 15 hin abgekantet und an den Flansch 15 angelegt ist, der Flansch 15 gemeinsam mit der Lasche 17 aufgewickelt. Durch diese in Figur 10C dargestellte Wicklung wird die Lasche 17 mit dem Flansch 15 fest verbunden.

In sämtlichen Ausführungsbeispielen ist der Krafteinleitungspunkt zwischen der Unterschale 12 und dem zweiten Teil 12', hier beispielsweise der Oberschale 12', nahe an denjenigen Bereichen angeordnet, an denen die Unterschale 12 und die Oberschale 12' um ein abzuschirmendes Bauteil umläuft. Hierdurch sind die an der Verbindungsstelle 13 auftretenden Kräfte, die ein Auffedern der Verbindungsstelle 13 bewirken könnten, möglichst gering gehalten. Weiterhin ermöglichen sämtliche Beispiele, dass die Oberschale 12' und die Unterschale 12 mit einer vorbestimmten Vorspannung miteinander verbunden werden können. Dies wird dadurch bewirkt, dass die Verbindung ohne einen vorbestimmten geometrischen Verbindungspunkt erfolgt, beispielsweise wenn eine Vielzahl von gestuften Rastmöglichkeiten vorgesehen wird. So wird beispielsweise in Figur 10 die Abkantung der Lasche 17 erst dann vorgenommen, wenn Unterschale 12 und Oberschale 12' mit einer bestimmten Kraft/Vorspannung aufeinander gepresst werden. Abhängig vom Material und der Dicke einer zusätzlichen Isolationsschicht ist es daher möglich, dass die Lasche 17 nicht unmittelbar auf dem Flansch 15 aufliegt, sondern dort ein Spalt gegeben ist. Dann wird die durch die Öffnung 16 durchgeführte Lasche 17 abgekantet und die Verbindung wie in Figur 10 dargestellt vorgenommen.

## Patentansprüche

1. Hitzeschild (10) zur thermischen und/oder akustischen Abschirmung eines Körpers (2) mit
einer metallischen Lage (11), die derart ausgebildet ist, dass sie den Körper derart umgreifen kann, dass zwei gegenüberliegende Außenkanten (14, 14') der metallischen Lage (11) benachbart zueinander angeordnet und zum Schließen des Umgriffs um den Körper (2) miteinander verbindbar oder verbunden sind,
**dadurch gekennzeichnet, dass**
die erste Außenkante (14) einen nach außen abgekanteten Flansch (15) aufweist, der benachbart zu der Abkantung mindestens eine Durchgangsöffnung (16) aufweist und
die zweite Außenkante (14') mindestens eine im Wesentlichen parallel zur oder in Umfangsrichtung vorragende Lasche (17) aufweist, die durch die Durchgangsöffnung (16) durchführbar oder durchgeführt ist und in Durchführungsrichtung hinter der Durchgangsöffnung (16) mit dem nach außen abgekanteten Flansch und/oder der ersten Außenkante (14) verbindbar oder verbunden ist.

2. Hitzeschild (10) nach dem vorhergehenden Anspruch, **dadurch gekennzeichnet, dass** die Lasche (17) mit dem nach außen abgekanteten Flansch und/oder der ersten Außenkante formschlüssig verbindbar oder verbunden ist.

3. Hitzeschild (10) nach dem vorhergehenden Anspruch, **dadurch gekennzeichnet, dass** die Lasche (17) in Durchführungsrichtung hinter der Durchgangsöffnung (16) nach außen abgekantet, aufgewickelt und/oder um die Durchführungsrichtung gedreht ist.

4. Hitzeschild (10) nach einem der vorhergehenden Ansprüche, **dadurch gekennzeichnet, dass** zwei, drei oder mehrere Durchgangsöffnungen (16a, 16b) sowie für eine, mehrere oder alle der Durchgangsöffnungen eine oder mehrere Laschen (17) vorgesehen sind.

5. Hitzeschild (10) nach einem der vorhergehenden Ansprüche, **dadurch gekennzeichnet, dass** eine, mehrere oder alle Durchgangsöffnungen (16a, 16b) schlitzförmig, insbesondere als geradlinig verlaufender Schlitz ausgebildet sind.

6. Hitzeschild (10) nach einem der vorhergehenden Ansprüche, **dadurch gekennzeichnet, dass** eine, mehrere oder alle Durchgangsöffnungen (16a, 16b) eine Länge aufweisen, die um 0,5-20 % größer, vorteilhafterweise um 10 % größer ist als die Breite der zugehörigen Lasche.

7. Hitzeschild (10) nach einem der vorhergehenden Ansprüche, **dadurch gekennzeichnet, dass** der Flansch (15) umbördelbar oder umgebördelt ist derart, dass der abgekantete Bereich der Lasche (17) zwischen dem nicht umgebördelten Abschnitt des Flansches (15) und dem umgebördelten Abschnitt des Flansches (15) senkrecht zur flächigen Erstreckung des abgekanteten Bereichs formschlüssig festgelegt ist.

8. Hitzeschild (10) nach einem der vorhergehenden Ansprüche, **dadurch gekennzeichnet, dass** auf der Innenseite der metallischen Lage (11) zumindest bereichsweise eine Isolationslage angeordnet ist.

9. Hitzeschild (10) nach dem vorhergehenden Anspruch, **dadurch gekennzeichnet, dass** die Isolationslage die innerste Lage des Hitzeschildes bildet.

10. Hitzeschild (10) nach einem der vorhergehenden Ansprüche, **dadurch gekennzeichnet, dass** die Isolationsschicht ein Vlies, insbesondere ein Nadelvlies, insbesondere ein Nadelvlies aus Glasfasern, insbesondere E-Glasfasern, ECR-Glasfasern, und/oder Silikatfasern, insbesondere mit einer Dicke Dv mit 3 mm ≤ Dv ≤ 20 mm, vorteilhafterweise 6 mm ≤ Dv ≤ 12 mm, vorteilhafterweise auch als Formteil, ist.

11. Bauelement mit einem Körper (2) und einem Hitzeschild (10) nach einem der vorhergehenden Ansprüche,
**dadurch gekennzeichnet,**
**dass** das Hitzeschild (10) den Körper (2) umgreift, und
**dass** zwei gegenüberliegende Außenkanten (14, 14') der metallischen Lage (11) benachbart zueinander angeordnet und miteinander verbunden sind.

12. Bauelement nach dem vorhergehenden Anspruch, **dadurch gekennzeichnet, dass** der Körper (2) ein Abgasrohr, ein Abgaskrümmer, ein Turbolader, ein Katalysator, insbesondere ein SCR-Katalysator, ein Partikelfilter oder ein anderes Bauteil oder Nebenaggregat eines Verbrennungsmotors ist.

## Claims

1. Heat shield (10) for thermally and/or acoustically shielding a body (2), comprising
a metal layer (11) which is designed in such a way that it can enclose the body such that two opposite outer edges (14, 14') of the metal layer (11) are arranged adjacent to one another and are or can be connected to one another in order to close the enclosure around the body (2),
**characterized in that**
the first outer edge (14) has an outwardly bent flange (15) which has at least one through-opening (16) adjacent to the bend, and
the second outer edge (14') has at least one tab (17) projecting substantially parallel to or in the circumferential direction, which tab is or can be passed through the through-opening (16) and, behind the through-opening (16) in the direction of passage, is or can be connected to the outwardly bent flange and/or the first outer edge (14).

2. Heat shield (10) according to the preceding claim, **characterized in that** the tab (17) is or can be connected to the outwardly bent flange and/or the first outer edge in a form-fitting manner.

3. Heat shield (10) according to the preceding claim, **characterized in that** the tab (17), behind the through-opening (16) in the direction of passage, is bent outwards, rolled up and/or twisted about the direction of passage.

4. Heat shield (10) according to any one of the preceding claims, **characterized in that** two, three or more through-openings (16a, 16b) are provided, and one or more tabs (17) are provided for one, some or all of the though-openings.

5. Heat shield (10) according to any one of the preceding claims, **characterized in that** one, some or all through-openings (16a, 16b) are slot-shaped, in particular are designed as a slot extending in a straight line.

6. Heat shield (10) according to any one of the preceding claims, **characterized in that** one, some or all through-openings (16a, 16b) have a length that is 0.5-20% larger, advantageously 10% larger, than the width of the associated tab.

7. Heat shield (10) according to any one of the preceding claims, **characterized in that** the flange (15) is or can be crimped such that the bent region of the tab (17) is secured in a form-fitting manner between the non-crimped portion of the flange (15) and the crimped portion of the flange (15), perpendicular to the planar extension of the bent region.

8. Heat shield (10) according to any one of the preceding claims, **characterized in that** an insulation layer is arranged at least in some areas on the inner side of the metal layer (11) .

9. Heat shield (10) according to the preceding claim, **characterized in that** the insulation layer forms the innermost layer of the heat shield.

10. Heat shield (10) according to any one of the preceding claims, **characterized in that** the insulation layer is a nonwoven, in particular a needle-punched nonwoven, in particular a needle-punched nonwoven made of glass fibres, in particular E glass fibres, ECR glass fibres, and/or silicate fibres, in particular having a thickness Dv where 3 mm ≤ Dv ≤ 20 mm, advantageously 6 mm ≤ Dv ≤ 12 mm, advantageously also in the form of a moulded part.

11. Component comprising a body (2) and a heat shield (10) according to any one of the preceding claims,
**characterized**
**in that** the heat shield (10) encloses the body (2), and
**in that** two opposite outer edges (14, 14') of the metal layer (11) are arranged adjacent to one another and are connected to one another.

12. Component according to the preceding claim, **characterized in that** the body (2) is an exhaust pipe, an exhaust manifold, a turbocharger, a catalytic converter, in particular an SCR catalytic converter, a particle filter, or another component or auxiliary unit of an internal combustion engine.

## Revendications

1. Bouclier thermique (10) destiné au blindage thermique et/ou acoustique d'un corps (2) avec
une couche métallique (11) qui est constituée de telle sorte qu'elle peut enserrer le corps de telle sorte que deux arêtes extérieures (14, 14') opposées de la couche métallique (11) sont disposées au voisinage l'une de l'autre et peuvent être raccordées ou sont raccordées l'une à l'autre pour la fermeture de l'enserrement du corps (2),
**caractérisé en ce que**
la première arête extérieure (14) comporte une bride (15) repliée vers l'extérieur qui comporte au moins une ouverture de traversée (16) au voisinage de la pliure, et
la deuxième arête extérieure (14') comporte au moins une patte (17), faisant saillie essentiellement parallèlement à la direction circonférentielle ou dans la direction circonférentielle, qui peut être passée ou qui est passée à travers l'ouverture de traversée (16), et qui peut être raccordée ou est raccordée, derrière l'ouverture de traversée (16) dans la direction de traversée, à la bride repliée vers l'extérieur et/ou à la première arête extérieure (14).

2. Bouclier thermique (10) selon la revendication précédente, **caractérisé en ce que** la patte (17) peut être raccordée ou est raccordée par liaison de forme à la bride repliée vers l'extérieur et/ou à la première arête extérieure.

3. Bouclier thermique (10) selon la revendication précédente, **caractérisé en ce que** la patte (17) est repliée vers l'extérieur derrière l'ouverture de traversée (16) dans la direction de traversée, enroulée et/ou tournée autour de la direction de traversée.

4. Bouclier thermique (10) selon l'une des revendications précédentes, **caractérisé en ce que** deux, trois ou plusieurs ouvertures de traversée (16a, 16b) sont prévues de même qu'une ou plusieurs pattes (17) pour une, plusieurs ou la totalité des ouvertures de traversée (16).

5. Bouclier thermique (10) selon l'une des revendications précédentes, **caractérisé en ce qu'**une, plusieurs ou toutes les ouvertures de traversée (16a, 16b) sont constituées en forme de fente, en particulier en tant que fente rectiligne.

6. Bouclier thermique (10) selon l'une des revendications précédentes, **caractérisé en ce qu'**une, plusieurs ou toutes les ouvertures de traversée (16a, 16b) présentent une longueur qui est supérieure de 0,5 - 20 %, avantageusement supérieure de 10 %, à la largeur de la patte correspondante.

7. Bouclier thermique (10) selon l'une des revendications précédentes, **caractérisé en ce que** la bride (15) peut être rabattue ou est rabattue de telle sorte que, entre le tronçon non rabattu de la bride (15) et le tronçon rabattu de la bride (15), la zone repliée de la patte (17) est immobilisée par liaison de forme perpendiculairement à l'étendue plane de la zone repliée.

8. Bouclier thermique (10) selon l'une des revendications précédentes, **caractérisé en ce qu'**une couche d'isolation est disposée au moins par endroits sur le côté intérieur de la couche métallique (11).

9. Bouclier thermique (10) selon la revendication précédente, **caractérisé en ce que** la couche d'isolation forme la couche la plus intérieure du bouclier thermique.

10. Bouclier thermique (10) selon l'une des revendications précédentes, **caractérisé en ce que** la strate d'isolation est un non-tissé, en particulier un non-tissé aiguilleté, en particulier un non-tissé aiguilleté en fibres de verre, en particulier en fibres de verre E, en fibres de verre ECR, et/ou en fibres de silicate, en particulier avec une épaisseur Dv avec 3 mm ≤ Dv ≤ 20 mm, de façon avantageuse 6 mm ≤ Dv ≤ 12 mm, de façon avantageuse également en tant que pièce moulée.

11. Elément de construction avec un corps (2) et un bouclier thermique (10) selon l'une des revendications précédentes,
**caractérisé en ce que**
le bouclier thermique (10) enserre le corps (2), et **en ce que** deux arêtes extérieures (14, 14') opposées de la couche métallique (11) sont disposées au voisinage l'une de l'autre et sont raccordées l'une à l'autre.

12. Elément de construction selon la revendication précédente, **caractérisé en ce que** le corps (2) est un tuyau d'échappement, un collecteur d'échappement, un turbocompresseur, un catalyseur, en particulier un catalyseur SCR, un filtre à particules ou un autre composant ou un organe secondaire d'un moteur à combustion.
